Europäisches Patentamt

(19) European Patent Office

Office européen des brevets

(11) Publication number: **0 005 881**

**B1**

## (12) EUROPEAN PATENT SPECIFICATION

(45) Date of publication of patent specification: **07.09.83**

(21) Application number: **79200252.9**

(22) Date of filing: **22.05.79**

(51) Int. Cl.³: **A 01 K 1/10, B 65 D 83/00**

(54) Haybox.

(30) Priority: **23.05.78 NL 7805548**

(43) Date of publication of application:
**12.12.79 Bulletin 79/25**

(45) Publication of the grant of the patent:
**07.09.83 Bulletin 83/36**

(84) Designated Contracting States:
**BE DE FR GB NL**

(56) References cited:
**DE - C - 34 323**
**GB - A - 178 989**
**US - A - 1 421 142**
**US - A - 1 518 553**
**US - A - 2 296 215**
**US - A - 3 388 677**

(73) Proprietor: **Snel, Cornelis**
**Atlasdreef 53**
**NL-3561 AC Utrecht (NL)**

(73) Proprietor: **Kuus, Albert**
**Korhoenlaan 41**
**NL-3721 EB Bilthoven (NL)**

(72) Inventor: **Snel, Cornelis**
**Atlasdreef 53**
**NL-3561 AC Utrecht (NL)**
Inventor: **Kuus, Albert**
**Korhoenlaan 41**
**NL-3721 EB Bilthoven (NL)**

(74) Representative: **Rhijnsburger, Johan Gerard**
**'s-Gravenbroekseweg 32**
**NL-2811 GE Reeuwijk (NL)**

The file contains technical information submitted after the application was filed and not included in this specification

Haybox

The invention relates to a haybox for the feeding of horses, at the top part provided with a rack and at the bottom part with a free movable, pressure-loaded bottom plate, which is movable between lowered and raised positions within the box and when the box is empty is pressed against the rack.

Such a rack is known from DE—C—34323, according to which the freely movable bottom plate under action of a counterweight presses the feed against the grid of the rack.

Apart from the fact that this construction is rather cumbersome and needs much space by extending below the bottom of the box itself, another objection is that when the horse is eating at an off-center part of the rack the pressure on the smaller hay surface lying against the rack may become so great that the horse can no longer or only with difficulty take the hay away. This relates to the fact that the bottom is rigidly constructed and is not able to tilt to keep the pressure equally divided.

In GB—A—178,989 a feeder for poultry is described with a fixed front having pick openings, against which the foodstuff is pressed by means of a vertical shutter moving horizontally. On page 2 it is indicated that a rack is known with a free movable bottom which by means of a piston or spring is pressed against the fixed bars at the top side. This rack has the same disadvantage as mentioned above. Finally it is known from US—A—3,388,677 to load a freely movable bottom at the corners with springs to press it upwards. This device, however, is designed to dispense plates, so that no specific construction of the bottom is suggested.

The invention has as a main objective to provide a rack with a freely movable spring loaded bottom, which is tiltable, the latter feature preventing the bottom from getting jammed and the hay at off-center parts becoming getting too heavily pressed, as mentioned above.

Thus the device according to the invention is characterized in that the bottom plate is provided with at least two spaced apart perforations through which guide bars extend, which are provided with pressure springs on the underside of the movable plate for exerting upwards pressure, means which are spherical at the top being provided at least in part between the springs and the movable plate for transferring spring force to said movable plate, which means have a larger diameter than that of the perforations, the diameter of the guide bars extending through the movable bottom plate being smaller than the diameter of the perforations in the movable bottom plate such as to allow the bottom plate to carry out a tilting movement with respect to the walls of the box.

The advantages of the invention are that the horse can eat in a natural attitude, i.e. with its head downwards, relatively little hay will be wasted and no danger is present for eye irritations and infections.

The box may advantageously be so formed that it is not required to pull the bales of hay apart since they will at least partly fit in the haybox.

Jamming of the construction by dust or haytufts is substantially prevented. The box may also be used as a fixed part in a stable construction, preferably in the outer part of the stable wall or door so that feeding from the outside of the stable is possible and additional loss of space in the stable is avoided.

The haybox is preferably rectangular, of such dimensions that it will partly or wholly contain the ordinary, commercially available bales of hay, and of such a height that the former requirement will be met with. Thus, the dimensions as to length and width will be advantageously accommodated to the dimensions of the bales of hay that are available on the market. The space-saving construction allows the height of the box to be adjusted to 80—100 cm, preferably 90 cm, which presents the natural eating position of the horse. The box may thus be constructed in such a way that the height in the area referred to is adjustable. When it is for instance desirable to reduce the height for foals or ponies, this may, for a box placed on the floor, take place by means of a clip or plate or some other slidable construction at the bottom of the box, while in case the box is fixed to the wall a rail or slide may be used. The top of the box is closed by means of a preferably straight rack structure, consisting of a number of spikes or bars, which are placed at such a distance from each other that the horse, as in the case of common racks, can just put its mouth through without being able to entirely do so. This distance is typically about 7 cm, but for younger animals and ponies may be somewhat smaller. If desired the structure may be made in such a way that the distance between the bars is adjustable.

A box of the dimensions referred to for instance typically has six bars with five openings in between. The rack is preferably constructed with a small inclination, so that when eating it will be easier for the horse to reach the rear side of the rack farthest away from it.

In the case of a rectangular box the bottom is spring loaded by means of four pressure springs, which are respectively put at the four corners of the rectangle. These pressure springs consist of guide bars, around which the coil or spiral is provided. The tension of the springs is chosen such as to allow the bottom to be pressed against the rack when the box is empty, while the springs themselves will be substantially pushed in when the box is entirely filled with hay.

The guide bars provided with the spring coils are mounted below the bottom, for instance suitably on cross connections or reinforcements applied between the side walls of the box. The box is anchored to the wall or floor by means of a known construction. It is advantageous if the box can be easily unfastened so that it may be removed as desired. The upper part of the box situated above the guide bars is preferably covered, for instance by means of a plate, in order to screen off the construction of bars and also if desired to fasten the bars.

The pressure springs are attached to the lower part of the bottom in such a way that the latter will be able to make a tilting movement by means of a ball or conical shaped body or means present at the upper side of the pressure springs, at the point where these are adjacent to the bottom plate.

Preferably this means consists of a non-compressible body which is spherical at the upper part and flattened at the lower part. Since the lower part need not be spherical, it can be shaped as is favourable for the attachment of the springs. The choice of an either flattened or unflattened ball-like means in respect of the diameter of the openings in the bottomplate determines the degree of tilting movement the bottom can carry out in addition to the thickness of the bottomplate and the diameter of the guide bars.

In general the greater the tiltability the less the bottom tends to get jammed. It will be understood that the ratios of the aforementioned parameters, especially the clearance of the guide bars in the bores will be chosen in such a way that for practical purposes an acceptable tiltability will be obtained.

It is further preferred to give the opening in the bottomplate a slight slope and to adapt it to the spherical top part of the body that is acting as a joint. Thus the possibility that hay, dirt and dust will accumulate in the contact area of bottom plate and body, and deposition is diminished. In this way the construction obtains as it were a self-cleaning effect because whatever the position of the bottom, hay, dust or other dirt cannot penetrate or cause the bottom to be jammed. The spherical body, which is spherical at the top, is preferably solid and consists of an inert material like nylon or another non-compressible, not moisture-sensitive and non-corrosive plastic material. Nylon bearing material is preferred.

The body which is spherical at the top is usually mounted loosely on the guide bar, where it is kept firmly in position by the pressure of the springs. This provision is of importance to cause the pressure to be equally divided over the total surface of the rack when the horse is eating at the side thereof, as already mentioned above.

The dimensions of the box as well as the spring tension are naturally adjusted dependent on the horses to be fed, the type and weight of the hay and the location.

In a preferred embodiment of the invention the haybox is attached to the wall, the rack being adjusted to the desired height and the dimensions being chosen such as to allow at least part of the bale of hay to be fitted into the box. Thus the construction of the box may be narrower, which yields considerable saving of space. Further the box is attached with a small inclination in respect of the wall, which for the horse is easier.

An additional means may suitably be provided at the lower part of the bottom, so that the bottom may be fixed in place when it is desired to clean the box or, for instance, to replenish additional loose hay, owing to which it is not necessary to keep down the bottom by hand. Generally, the weight of the loose hay suffices to keep the bottom down. The rack is suitably, by means of hinges at the back side, placed on the box, so that the hay can be placed by opening the rack. At the front of the box a lock should be provided of such a type as will not by accident be unfastened by the horse. The crossbar of the rack serves as a safeguard and moreover functions as a grip and as a chafing bar.

The haybox will now be described with reference to the drawings, in which

Figure 1 is a perspective view of the haybox 1, the back side of which has been removed for the sake of clarity; this box is placed on the floor.

Figure 2 shows the upper part, the rack, of the box.

Figure 3 represents the anchoring of the free moving bottom of the haybox, of which

Figure 4 shows an enlarged detail, while

Figure 5 is a side view of a box suspended from the wall and provided with two pressure springs.

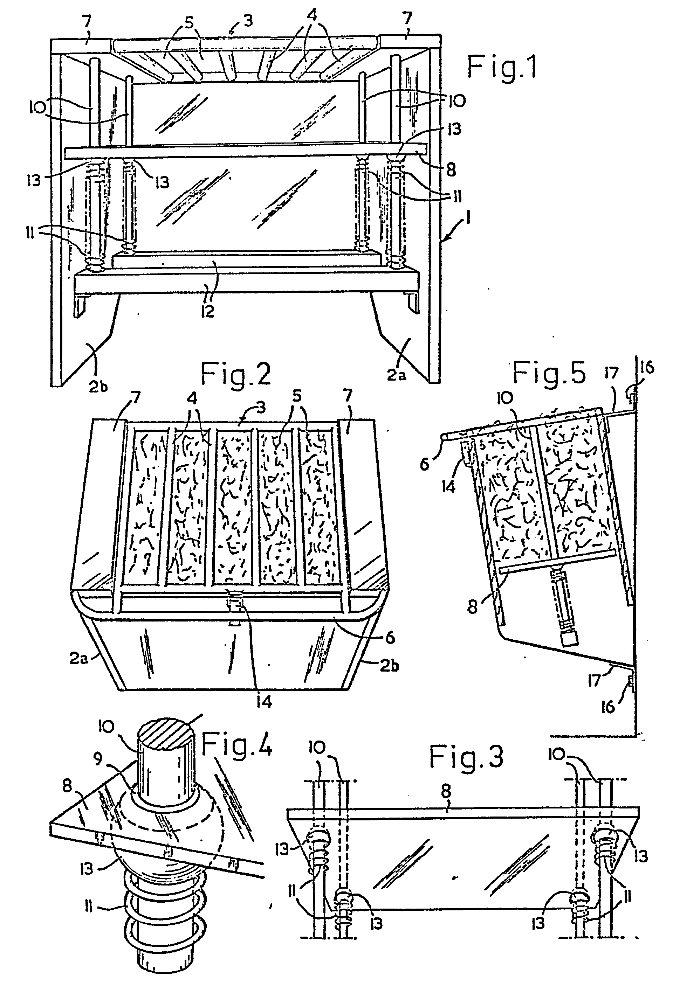

In figure 1 the inner construction of the box 1 is shown, with the two side walls 2a and 2b. This box is closed by the cover 3, consisting of a composition of bars in the form of a rack, wherein between each of the crossbars 4 a vacancy 5 has been left with a clearance commonly used for racks.

The cover is at the front provided with a bar 6, by means of which the rack may be lifted and closed. Figure 2 schematically shows a closure 14, by means of which the rack is fastened. This closure is of an ordinary type, the only requirement being that it cannot accidentally be unfastened by the horse itself. The cover contains at its sides the plates 7, which are fixed above the guide bars 10, on two sides of the rack. These plates serve to protect and to attach the bars. The free bottomplate 8 is provided with four circular recesses 9, through which the bars 10 pass. Below plate 8 on the bars 10 are fixed pressure springs 11, the dimensions of which are such as to enable them to press the bottomplate with sufficient force against the rack 3 when the box is not filled with hay. The bars are fixed to supporting plates 12, which are attached to the side walls 2a and 2b below the bottom. On the bars under the free bottom is further fixed a ball-shaped means 13. In figure 3 this construction is shown in such a way that the underside of the free bottom can be seen.

Figure 4 shows an enlarged form of a bar with bottom holes. The dimension of the recesses is somewhat larger than the diameter of the bar, with the result that the bottom owing to the clearance between the bar and the recess and the ball shape of means 13 is enabled to slightly tilt or rock. A suitable clearance is chosen depending on the size and shape of the box.

Figure 5 represents a side view of a feed box attached to the wall. In this embodiment, which has the advantage of occupying little space, the construction of the box is narrower in depth than the embodiment of figures 1 and 2, wherefor it requires only two pressure springs. With this box the haybale may be put in with its narrow side. The box is at the lower and upper part attached by screws 16 via supports 17. Further the box is designed in a slightly tilting position. By means of a rail the height can be made adjustable.

Besides the embodiments described above the haybox according to the invention may be taken up in a stable as a fixed part in order to save space. The haybox may be attached to the outside of a stable door or stable wall, the cover of the box in which the rack part is included being integrated with the bars or lattice-work of the stable wall or door. The box is in this arrangement applied under the bar construction in a hingeable position and is put in a filling condition by moving it away from the stable wall or door. In this way the box comes free from the fixed rack and can be filled with hay, which is inserted through the top. Then the box is restored to its original position.

This embodiment has the advantage that one need not enter the stable for feeding purposes but may serve the horse from the outside of the stable, which presents a more efficient way of working. Also, there is no loss of space in the stable. For manèges where a great number of horses have to be fed this means a substantial saving of time, it also being possible for laymen to feed the horses. The haybox without the rack is in the eating position preferably pressed against the wall and is retained by means of a lock, owing to which the box will not automatically come loose. In the filling condition, in which the box by the pivot action is moved free from the rack, it is preferably blocked by a pin or anchoring means. The bar construction of a stable door or wall, which is normally provided with bars, is in this case made in such a way that the rack forms part of it, i.e. the bars at the upper side of the woodwork to which the box is attached run along the upper side of the haybox, viz. along the side wall, front wall and other side wall and suitably run upwards slantingly, for instance 1.20 meter, back to the upper side of the bar construction. Preferably the bars of the front wall of the box do not run back to the upper wall in a straight line, but initially with a small inclination with the vertical axis and then with a larger one. This form lends more space to the horse when it is eating. In this embodiment various modifications are possible.

Thus one may make the shape of the upright bar structure aesthetical or left open at the top or one may for instance replace the bar construction by a wooden wall. Further the rack itself is preferably constructed slightly slantingly upwards, as mentioned above in respect of the other embodiments. These modifications, however, mainly relate to the shape of the haybox. The main principle of the embodiment described above is that the box according to the invention may be combined with and integrated in a stable structure with bars, the rack being attached to the exterior of a stable wall or door in a hingeable position as a fixed part of the bar structure and the box and rack virtually forming two separate parts. Therefore the invention also comprises a stable wall or stable door/haybox combination wherein the rack is a fixed part of the stable door or wall and the haybox is provided at the exterior of the stable.

**Claims**

1. Haybox for the feeding of horses provided at the top part with a rack (4, 5) and at the bottom part with a freely movable, pressure-loaded bottom plate (8) which is movable between lowered and raised positions within the box (1) and when the box is empty is pressed against the rack (4, 5), characterized in that the bottom plate (8) is provided with at least two spaced apart perforations (9) through which guide bars (10) extend, which are provided with pressure springs (11) on the underside of the movable plate (8) for exerting upwards pressure, means (13) which are spherical at the top being provided at least in part between the springs (11) and the movable plate (8) for transferring spring force to said movable plate (8), which means (13) have a larger diameter than that of the perforations (9), the diameter of the guide bars (10) extending through the movable bottom plate (8) being smaller than the diameter of the perforations (9) in the movable bottom plate (8) such as to allow the bottom plate (8) to carry out a tilting movement with respect to the walls (2a, 2b) of the box.

2. Haybox according to claim 1, characterized in that the edges of the perforations (9) in the bottom plate (8) are slightly sloped in such a way that they follow the circumference of the spherical top part of means (13).

3. Haybox according to claims 1—2, characterized in that the spherical top part of means

(13) substantially fits in the perforations (9) of the movable plate (8).

4. Haybox according to claims 1—3, characterized in that means (13) is flattened at the bottom part.

5. Haybox according to claims 1—4, characterized in that means (13) comprises a non-compressible plastic body.

6. Haybox according to claims 1—5, characterized in that means (13) is loosely fitted on the guide bar (10) and is pressed against the underside of the movable plate (8).    .

7. Haybox according to claim 1, characterized in that it further comprises supports (17) connectable to a vertical surface and screws (16) for connecting the supports (17) to such surface, the haybox being supported in such a manner that a lower portion of the haybox is closer to the vertical surface than an upper portion whereby walls (2a, 2b) of the haybox are slanted with respect to the vertical surface.

8. Haybox according to claim 1, characterized in that the rack (20) is a fixed part of a stable construction (18) provided with bars (19), the box being positioned at the outside of the stable.

**Patentansprüche**

1. Heubox zum Futtern von Pferden, an der Oberseite mit einer Raufe (4, 5) und an der Unterseite mit einer frei beweglichen drückbelasteten Bodenplatte (8), die verschiebbar ist zwischen erniedrigten und erhöhten Stellen innerhalb der Box (1) und in leerem Zustand der Box (4, 5) gegen die Raufe angepresst wird, versehen ist, dadurch gekennzeichnet, dass die Bodenplatte (8) mit mindestens zwei getrennten Perforationen (9), wodurch sich Führungsstangen (19) erstrecken,

mit an der Unterseite der beweglichen Platte (8) Drückfeder (11) zur Ausübung eines aufwärts gerichteten Drückes, versehen ist, wobei an Ihrer Oberseite wenigstens kugelförmige Mittel zwischen den Federn und der beweglichen Platte (8) versehen sind, welche Mittel (13) einen Durchmesser haben grösser als derjenige der Perforations (9) wobei der Durchmesser der Führungsstangen (10) welche sich durch den beweglichen Bodenplatte erstrecken kleiner ist als der Durchmesser der Perforations (9) in der beweglichen Bodenplatte (8) wodurch die Bodenplatte (8) eine Kippbewegung in Bezug auf die Wände (2a, 2b) der Heubox ausführen kann.

2. Heubox nach Anspruch 1, dadurch gekennzeichnet, dass die Ränder der Perforationen (9) in der Bodenplatte (8) leicht geneigt sind und zwar in solcher Weise dass sie dem Umriss des kugelförmige Oberteiles der Mittel (13) folgen.

3. Heubox nach den Ansprüchen 1—2, dadurch gekennzeichnet, dass der kugelförmige Oberteil des Mittels (13) nahezu ganz in den Perforationen (9) der beweglichen Platte (8) passt.

4. Heubox nach den Ansprüchen 1—3, dadurch gekennzeichnet dass die Mittel (13) an der Bodenseite abgeplattet sind.

5. Heubox nach den Ansprüchen 1—4, dadurch gekennzeichnet dass die Mittel einen nicht-zusammendrückbaren Kunststoffkörper umfassen.

6. Heubox nach den Ansprüchen 1—5, dadurch gekennzeichnet, dass die Mittel (13) lose an der Führungsstange (10) befestigt sind und gegen der Unterseite der beweglichen Platte (8) gedrückt werden.

7. Heubox nach Anspruch 1, dadurch gekennzeichnet, dass sie weiter Stützen (17) die an einer vertikalen Oberfläche befestigt werden können und Schrauben (16) zur Befestigung dieser Stützen (17) an einer solchen Oberfläche umfasst, wobei die Heubox solcherweise gestützt ist dass ein unterer Teil der Heubox näher zur vertikalen Oberfläche ist als einen Oberteil und die Wände der Heubox in Bezug auf der vertikalen Oberfläche geneigt sind.

8. Heubox nach Anspruch 1, dadurch gekennzeichnet, dass die Raufe einen festen Teil einer Stallkonstruktion versehen mit Stangen ist, wobei die Box an der Ausenseite des Stalles aufgestellt ist.

**Revendications**

1. Mangeoire pour nourrir des chevaux, pourvue à sa partie supérieure d'un râtelier (4, 5) et à sa partie inférieure d'une plaque de fond (8) librement mobile, chargée par ressort, qui peut se déplacer entre une position basse et une position haute à l'intérieur de la mangeoire (1) et est pressée contre le râtelier (4, 5) lorsque la mangeoire est vide, caractérisée en ce que la plaque de fond (8) est pourvue d'au moins deux trous écartés (9) dans lesquels passent des barres de guidage (10) pourvues de ressorts de pression (11) sur le côté inférieur de la plaque mobile (8), pour exercer une pression vers le haut, des moyens (13) sphériques à leur partie supérieure, étant prévus au moins entre les ressorts (11) et la plaque mobile (8) pour transmettre la force des ressorts à la plaque mobile (8), lesquels moyens (13) ont un diamètre supérieur à celui des trous (9), le diamètre des barres de guidage (10) traversant la plaque de fond mobile (8) étant plus petit que le diamètre des trous (9) dans la plaque de fond mobile (8) de façon à permettre à la plaque de fond (8) d'effectuer un mouvement de basculement ou d'inclinaison par rapport aux parois (2a, 2b) de la mangeoire.

2. Mangeoire selon la revendication 1, caractérisée en ce que les bords des trous (9) dans la plaque de fond (8) sont légèrement inclinés de façon à suivre la circonférence de la partie supérieure sphérique des moyens (13).

3. Mangeoire selon les revendications 1—2, caractérisée en ce que la partie supérieure sphérique des moyens (13) s'ajuste en substance dans les trous (9) de la plaque mobile (8).

4. Mangeoire selon les revendications 1—4, caractérisée en ce que chaque moyen (13) est aplati à sa partie inférieur.

5. Mangeoire selon les revendications 1—4, caractérisée en ce que le moyen (13) comprend un corps en matière plastique incompressible.

6. Mangeoire selon les revendications 1—5, caractérisée en ce que chaque moyen (13) est ajusté de façon lâche sur la barre de guidage (10) et est pressé contre le dessous de la plaque mobile (8).

7. Mangeoire selon la revendication 1, caractérisée en ce qu'elle comprend de plus des supports (17) pouvant être connectés à une surface verticale, et des vis (16) pour connecter les supports (17) à une telle surface, la mangeoire étant supportée d'une manière telle qu'une partie intérieure de la mangeoire est plus proche de la surface verticale qu'une partie supérieure, ce qui fait que les parois (2a, 2b) de la mangeoire sont inclinées par rapport à la surface verticale.

8. Mangeoire selon la revendication 1, caractérisée en ce que le râtelier est une partie fixe d'une construction d'écurie (18) pourvue de barres, le mangeoire étant disposée à l'extérieur de l'écurie.

Fig.1

Fig.2

Fig.5

Fig.4

Fig.3